Europäisches Patentamt

European Patent Office

Office européen des brevets

(11) **EP 1 501 184 A1**

(19)

(12) **EUROPÄISCHE PATENTANMELDUNG**

| | |
|---|---|
| (43) Veröffentlichungstag:<br>　**26.01.2005 Patentblatt 2005/04** | (51) Int Cl.[7]: **H02P 6/00**, H02P 6/20,<br>　　H02P 5/17 |

(21) Anmeldenummer: **04025902.0**

(22) Anmeldetag: **07.08.2002**

| | |
|---|---|
| (84) Benannte Vertragsstaaten:<br>　**AT BE BG CH CY CZ DE DK EE ES FI FR GB GR**<br>　**IE IT LI LU MC NL PT SE SK TR**<br>　Benannte Erstreckungsstaaten:<br>　**AL LT LV MK** | (72) Erfinder:<br>　• **Hahn, Alexander**<br>　　**88605 Sauldorf(Ortseil Boll) (DE)**<br>　• **Heydrich, Walter**<br>　　**78112 St. Georgen (DE)**<br>　• **Rappenecker, Hermann**<br>　　**78147 Vöhrenbach (DE)** |
| (30) Priorität: **10.10.2001 DE 10149935** | |
| (62) Dokumentnummer(n) der früheren Anmeldung(en)<br>　nach Art. 76 EPÜ:<br>　**02767333.4 / 1 413 044** | (74) Vertreter: **Raible, Tobias, Dipl.-Phys.**<br>　**Raible & Raible**<br>　**Schoderstrasse 10**<br>　**70192 Stuttgart (DE)** |
| (71) Anmelder: **ebm-papst St. Georgen GmbH & Co.**<br>　**KG**<br>　**78112 St. Georgen (DE)** | Bemerkungen:<br>　Diese Anmeldung ist am 02 - 11 - 2004 als<br>　Teilanmeldung zu der unter INID-Kode 62<br>　erwähnten Anmeldung eingereicht worden. |

(54) **Elektronisch kommutierter Motor**

(57)　Ein elektronisch kommutierter Motor hat einen Stator (12, 14, 16) und einen mit diesem zusammenwirkenden Rotor (24), ferner Rotorstellungssensoren (26, 28, 30) zur Lieferung von Ausgangssignalen, welche durch ihre Signalkombination die augenblickliche Stellung des Rotors (24) charakterisieren. Zur Verarbeitung dieser Ausgangssignale ist jedem Rotorstellungssensor ein mit einem Ausgang (132) versehener Komparator (126, 126', 126") zugeordnet. Dieser Ausgang (132) nimmt bei Vorliegen eines bestimmten Wertes des zugeordneten Ausgangssignals ein vorgegebenes erstes Potenzial an. Die Ausgänge der Komparatoren sind jeweils über einen ersten Widerstand (134, 134', 134") mit einem vom ersten vorgegebenen Potenzial verschiedenen zweiten Potenzial und über einen zweiten Widerstand (138, 138', 138") mit einem Eingang (140) eines Vergleichskomparators (142) verbunden, welcher dazu ausgebildet ist, das Signal an diesem Eingang (140) mit einem Signal vorgegebener Größe zu vergleichen und dadurch an seinem Ausgang (150) ein Signal (50) zu liefern, dessen Frequenz im Vergleich zu der des Signals am Ausgang eines Rotorstellungssensors (26, 28, 30) erhöht ist.

Fig.3

EP 1 501 184 A1

**Beschreibung**

Elektronisch kommutierte Motoren werden für viele Antriebsaufgaben verwendet, z. B. in Staubsaugern, Gerätelüftern, medizinischen Geräten, Aufzeichnungsgeräten für Video etc. An solche Motoren werden viele Forderungen gestellt, unter denen ein niedriger Preis an erster Stelle steht. Dies bedeutet, dass ein solcher Motor für die jeweilige Antriebsaufgabe gut ausgenutzt werden muss, ohne dass er dabei überlastet wird.

Dies erreicht man gewöhnlich durch eine Strombegrenzung, das heißt der Motorstrom wird so begrenzt, dass er einen vorgegebenen oberen Grenzwert nicht überschreiten kann. Die Leistung eines solchen Motors wird dann aber beim Anlauf, wo eine besonders hohe Motorleistung notwendig ist, unnötig begrenzt. Auch könnten manche derartige Motoren bei hohen Drehzahlen mit höherer Leistung betrieben werden, weil dann ihre Kühlung besser ist und ein solcher Motor eine höhere Leistung aufnehmen und abgeben könnte. Auch könnte ein solcher Motor auch vielfach bei einer Lastspitze vorübergehend eine höhere Leistung abgeben, weil er eine "thermische Reserve" hat, d. h. beim kurzzeitigen Auftreten einer Überlast wird der Motor nicht sofort überhitzt. Hierfür gibt es spezielle Schaltungen, mit denen ein Motor durch ein elektronisches oder mechanisches Modell "nachgebildet" wird, doch sind solche Lösungen für Low-cost-Anwendungen zu teuer.

Es ist deshalb eine Aufgabe der Erfindung, einen neuen elektronisch kommutierten Motor bereitzustellen.

Erfindungsgemäß wird diese Aufgabe gelöst durch den Gegenstand des Anspruchs 1. Bei einem solchen Motor haben die Ausgangssignale der einzelnen Rotorstellungssensoren eine relativ niedrige Frequenz, die zur Drehzahl des Motors proportional ist. Durch die Erfindung gelingt es, diese Frequenz zu erhöhen, und zwar so, dass von der Drehzahl Null an, wo auch die erhöhte Frequenz den Wert Null hat, ein Signal zur Verfügung steht, dessen Frequenz erhöht ist, bei einem dreiphasigen Motor z. B. um den Faktor 3, was eine genauere Anzeige der Drehzahl, eine genauere Drehzahlregelung, eine genauere Erfassung der Drehstellung des Rotors, und eine exaktere Anpassung des oberen Grenzwerts des Motorstroms an die augenblickliche Drehzahl ermöglicht. Vielfach kann dadurch auf teure Encoder verzichtet werden.

Eine bevorzugte Ausgestaltung der Erfindung ist Gegenstand des Anspruchs 3. Dadurch, dass mindestens ein Stromimpuls erzeugt und dem Spannungsteiler zugeführt wird, erhöht sich der zum Spannungsteiler zugeführte Strom während der Dauer dieses Stromimpulses, und dadurch steigt die Obergrenze des Stromes an. Dies ermöglicht eine bessere Ausnutzung des Motors, da die drehzahlabhängigen Stromimpulse mit zunehmender Drehzahl die Obergrenze des Stromes erhöhen. Dies deshalb, weil ein Motor mit steigender Drehzahl gewöhnlich besser gekühlt wird und deshalb mehr Leistung abgeben kann. Dies gilt besonders für Außenläufermotoren.

Eine andere bevorzugte Weiterbildung der Erfindung ist Gegenstand des Anspruchs 4. Der Kondensator, welcher zu einem Teilwiderstand des Spannungsteilers parallel geschaltet ist, ist vor dem Einschalten des Motors entladen. Direkt nach dem Einschalten wirkt er deshalb wie ein Kurzschluss für diesen Teilwiderstand und erhöht beim Start den oberen Grenzwert vorübergehend, nämlich so lange, bis sich dieser Kondensator aufgeladen hat. Auf diese Weise kann bei einem solchen Motor das Startmoment erhöht werden, ohne dass dies eine dauernde Überlastung des Motors zur Folge hätte.

Eine andere bevorzugte Weiterbildung der Erfindung ist Gegenstand des Anspruchs 5. Tritt bei einem solchen Motor eine Lastspitze auf, so dass der Motorstrom seinen vorgegebenen Grenzwert überschreitet, so wird durch ein Zeitglied dieser Grenzwert während einer vorgegebenen Zeitspanne erhöht, sofern der Motor rotiert. Auf diese Weise wird bei einer Lastspitze die verfügbare Leistung des Motors zeitweilig erhöht. Jedoch wird bevorzugt vermieden, dass diese Erhöhung auch auftritt, wenn der Motor blockiert ist, denn in diesem Fall sollte der Motorstrom möglichst niedrig sein, um eine Überhitzung und die dadurch gegebene Brandgefahr zu vermeiden.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:

Fig. 1    ein Übersichtsschaltbild zur Erläuterung der Erfindung,

Fig. 2    ein Beispiel einer Vollbrückenschaltung für einen dreisträngigen Motor,

Fig. 3    eine Schaltung zur Erzeugung eines Signals 50 mit drehzahlabhängiger Frequenz, deren Frequenz drei mal so hoch ist wie die Frequenz der Hallsignale des Motors, aus denen das Signal 50 abgeleitet ist,

Fig. 4    ein Schaubild zur Erläuterung der Wirkungsweise von Fig. 3,

Fig. 5    eine Übersichtsdarstellung, welche mehrere bevorzugte Komponenten in ihrem Zusammenwirken zeigt,

Fig. 6    ein Schaltbild, welches nähere Einzelheiten der Anordnung nach Fig. 5 zeigt,

Fig. 7    eine schematische Darstellung, welche an einem Beispiel die Änderung der Obergrenze $I_{soll}$ für den Motorstrom abhängig von verschiedenen Betriebsparametem zeigt,

Fig. 8    Kurven, welche für das angegebene Ausführungsbeispiel den Anstieg der Obergrenze des Stroms mit zunehmender Drehzahl zeigen; die untere Kurve Iw zeigt den drehzahlabhängigen Anstieg dieser Obergrenze, und die obere Kurve Iwmax zeigt den drehzahlabhängigen Anstieg der Obergrenze, dem noch eine zusätzliche Erhöhung durch Aktivierung einer Anordnung überlagert ist, die in Fig. 5 und 6 mit 260 bezeichnet ist,

Fig. 9    ein Schaubild zur Erläuterung der Wirkungsweise des PWM-Generators 56 der Fig. 5 und 6,

Fig. 10    eine Darstellung analog Fig. 9, welche die Abläufe bei einer vorübergehenden Erhöhung der Obergrenze des Stroms zeigt,

Fig. 11    ein Schaltbild, welches eine Variante zur Anordnung nach Fig. 5 bzw. 6 zeigt, und

Fig. 12    ein Schaubild zur Erläuterung der Wirkungsweise von Fig. 11.

In der nachfolgenden Beschreibung werden gleiche oder gleich wirkende Teile mit denselben Bezugszeichen bezeichnet und gewöhnlich nur einmal beschrieben.

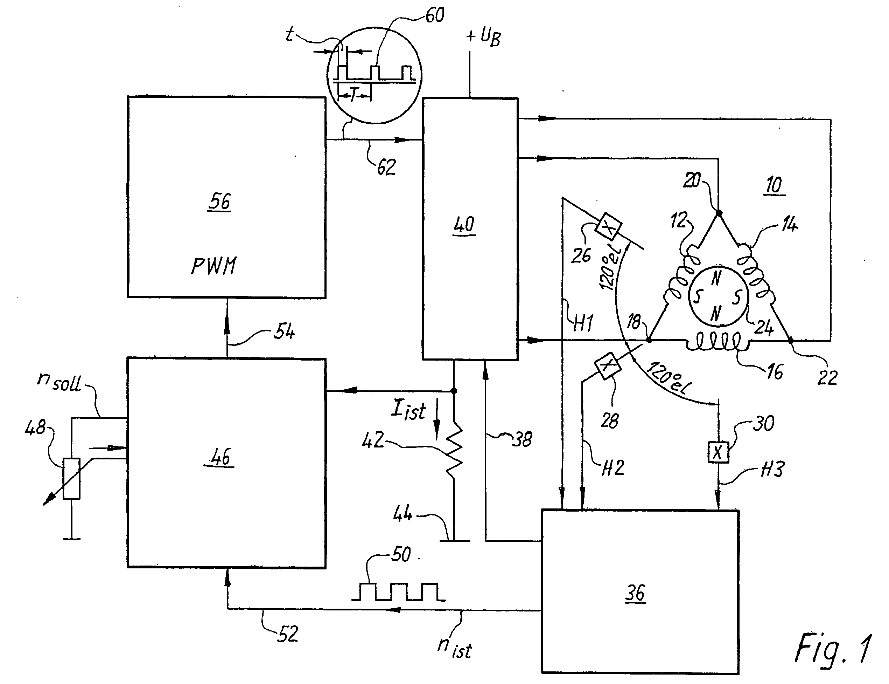

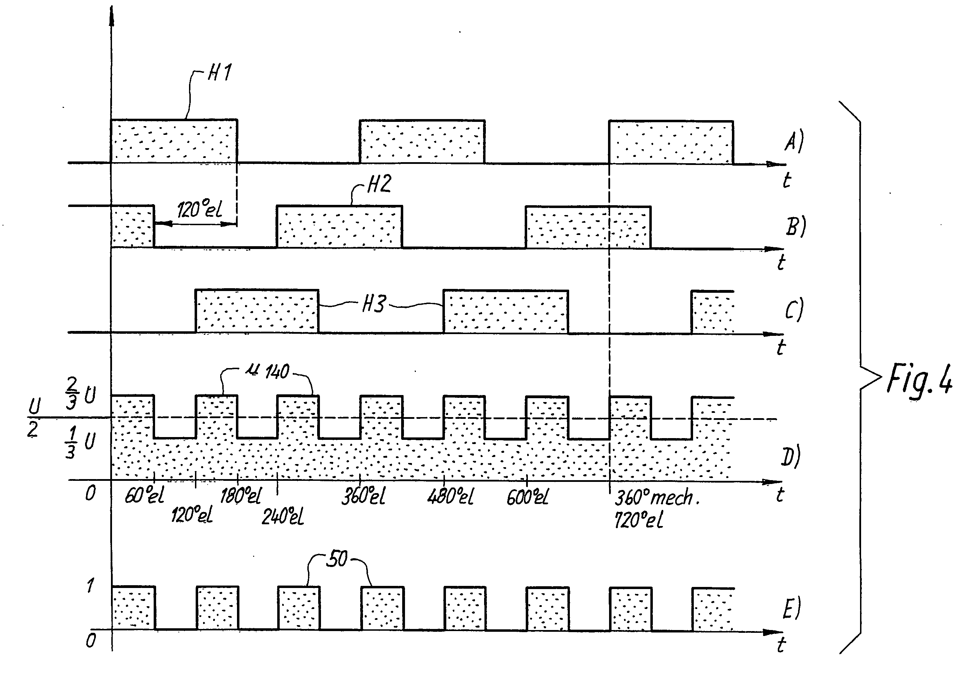

**Fig. 1** zeigt ein Übersichtsschaltbild mit einem elektronische kommutierten Motor (ECM) 10, hier als Beispiel einem Motor mit drei Strängen 12, 14, 16 in Dreieckschaltung mit den Anschlüssen 18, 20, 22, und einem permanentmagnetischen Rotor 24. Letzterer ist als Beispiel vierpolig dargestellt. Er steuert drei Hallgeneratoren 26, 28, 30, welche Winkelabstände von 120° el. haben und im Betrieb drei Signale H1, H2, H3 erzeugen, die gemäß Fig. 4A - 4C jeweils um 120° zueinander phasenverschoben sind. Diese Signale dienen zur Drehzahlmessung und zur Steuerung der Ströme durch die Stränge 12, 14, 16. Bevorzugt ist der ECM 10 ein Außenläufermotor.

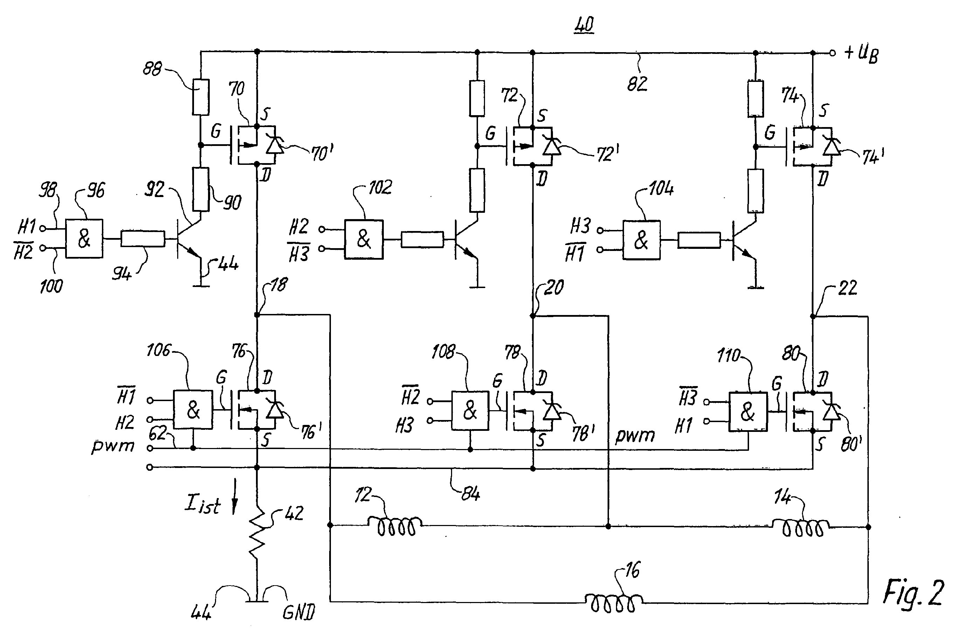

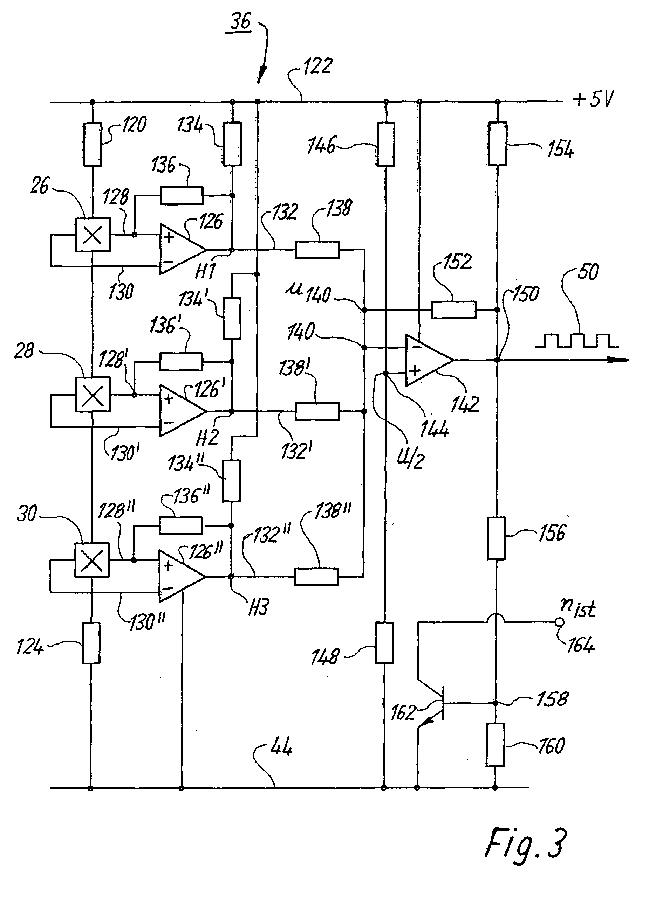

Die Signale H1, H2, H3 werden einer Signalverarbeitung 36 zugeführt, die in Fig. 3 dargestellt ist und deren Ausgangssignale über eine schematisch dargestellte Verbindung 38 einer Endstufe 40 zugeführt werden, die in Fig. 2 dargestellt ist und eine Steuerlogik für die Steuerung der Ströme in den Strängen 12, 14, 16 enthält. Die Anschlüsse 18, 20, 22 sind an die Endstufe 40 angeschlossen. Letztere ist an eine Betriebsspannung +UB angeschlossen, z. B. an +24 V, +48 V, +60 V oder dgl., und sie ist über einen Strommesswiderstand 42 an Masse 44 angeschlossen. Über den Widerstand 42 fließt der gesamte Strom des Motors 10, der mit Iist, also Strom-Istwert (actual value), bezeichnet ist.

Am Widerstand 42 entsteht im Betrieb ein Spannungsabfall, und dieser wird einer Vorrichtung 46 zugeführt, welche den Strom $I_{ist}$ begrenzt und als dynamischer Motorschutz dient. An dieser Vorrichtung kann über ein Potenziometer 48 eine gewünschte Drehzahl (rated speed) $n_{soll}$ für den Motor 10 eingestellt werden.

Der Vorrichtung 46 wird über eine Leitung 52 ein Signal 50 zugeführt, das die dreifache Frequenz der Signale H1, H2, H3 hat und in der Signalverarbeitung 36 hergestellt wird.

Über eine Signalverbindung 54 wird ein Ausgangssignal von der Vorrichtung 46 einer PWM-Steuerung 56 zugeführt, welche abhängig vom Signal an der Verbindung 54 ein PWM-Signal 60 liefert. Dieses hat eine Frequenz f von z. B. 25 kHz entsprechend einer Periodendauer T = 0,04 ms. Dieses Signal 60 hat ein Tastverhältnis pwm von

$$pwm = t/T \hspace{4cm} (1),$$

das zwischen 0 und 100 % liegt, je nach der Größe des Signals am Eingang 54. Das Signal 60 wird über eine Verbindung 62 der Endstufe 40 zugeführt.

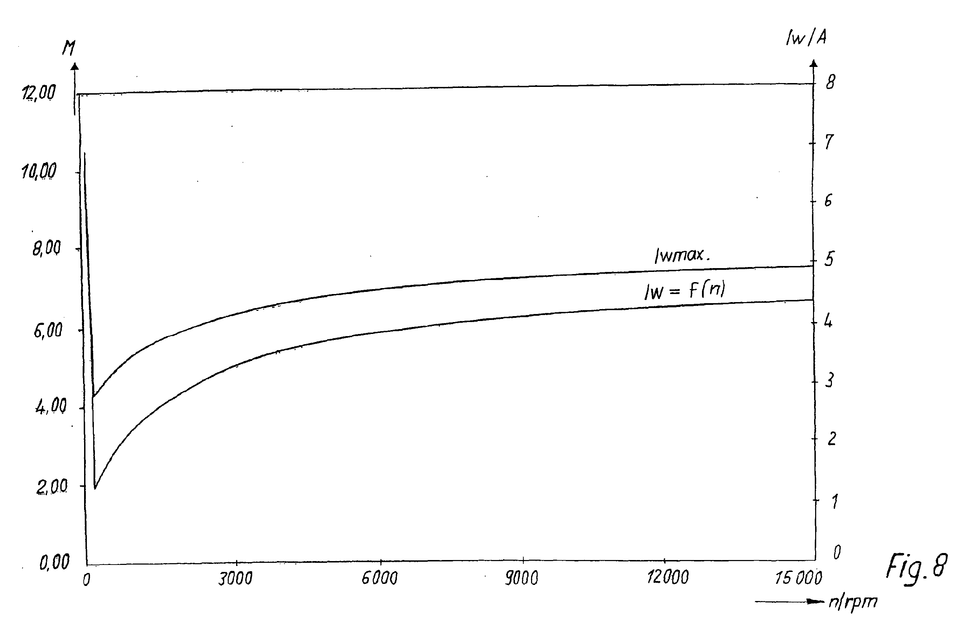

Die Vorrichtung 46 hat bevorzugt die bei solchen Motoren übliche Grundfunktion, die Drehzahl auf einen gewünschten Wert zu regeln, z. B. auf 10.000 U/min, und dabei den Motorstrom Iist auf einen vorgegebenen Wert zu begrenzen, der gemäß Fig. 8 bei 10.000 U/min z. B. etwa 4,2 A beträgt.

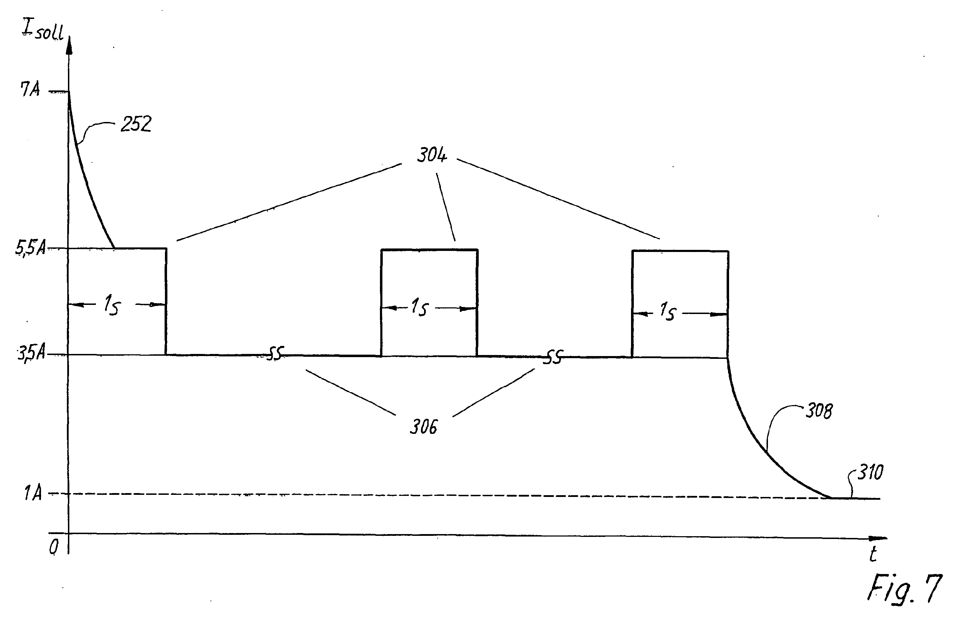

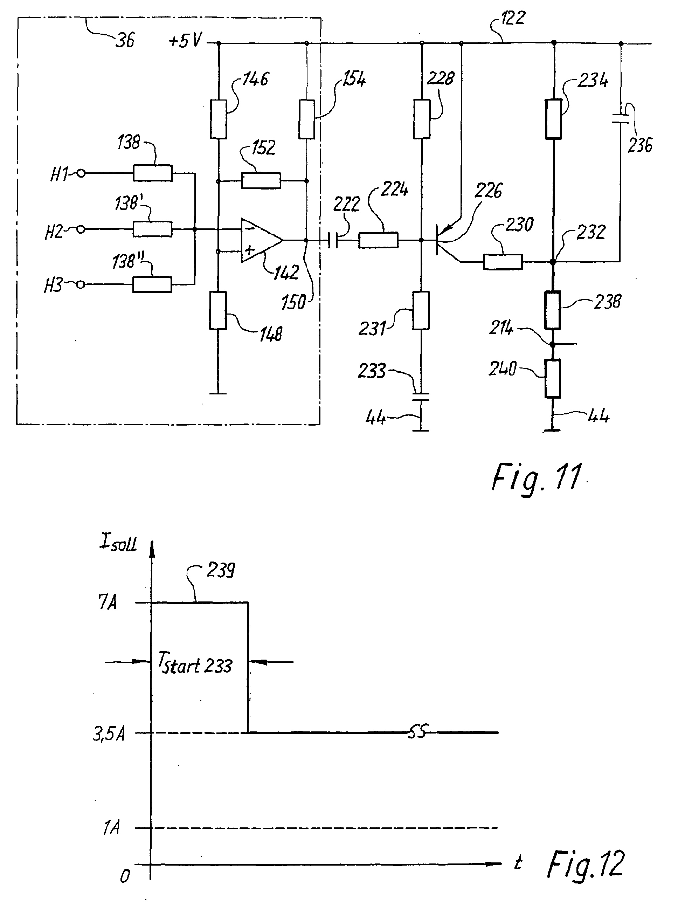

Beim Start soll die Vorrichtung 46 den Strom kurzzeitig, z. B. während 0,5 s, auf einen höheren Wert begrenzen, gemäß Fig. 7 oder 12 z. B. auf 7 A.

Wenn kurzzeitig höhere Belastungen auftreten, soll die Vorrichtung 46 diese Lasterhöhungen dadurch auffangen, dass sie z. B. während einer Sekunde einen höheren Strom von 5,5 A zulässt, auch beim Start, wobei zwischen diesen höheren Strömen (5,5 A) stets Abschnitte mit "normalem" Strom von 3,5 A liegen sollen, welche Abschnitte z. B. 4 s dauern.

Und schließlich soll bei blockiertem Motor 10, also bei der Drehzahl 0, der Strom auf einen niedrigen Wert abgesenkt werden, z. B. auf 1,3 A, damit der Motor 10 im Stillstand nicht überhitzt wird.

Ferner soll gemäß Fig. 8 bei einem Außenläufermotor 10 der zulässige Strom $I_{soll}$ (Iw in Fig. 8) mit der Drehzahl n ansteigen, weil besonders ein Außenläufermotor mit zunehmender Drehzahl besser gekühlt wird und deshalb einen höheren Strom "verträgt", wenn er mit hoher Drehzahl läuft.

Naturgemäß müssen bei einem bestimmten Motor 10 nicht alle diese Funktionen realisiert sein, sondern man kann sie auch nur teilweise verwenden, und die angegebenen Zahlen sind nur Beispiele, um das Verständnis zu erleichtern.

**Fig. 2** zeigt die wesentlichen Elemente des Leistungsteils 40. Dieser enthält eine Vollbrückenschaltung mit drei oberen Transistoren 70, 72, 74, welche als P-Kanal-MOSFETs ausgebildet sind, und drei unteren Transistoren 76, 78, 80, welche als N-Kanal-MOSFETs ausgebildet sind. Zu jedem dieser Transistoren ist eine Freilaufdiode 70', 72', 74', 76', 78', 80' antiparallel geschaltet.

Bei den oberen Transistoren 70, 72, 74 ist die Source S über eine Leitung 82 mit +UB verbunden. Bei den unteren Transistoren 76, 78, 80 ist die Source S mit einer Sammelleitung 84 verbunden, welche über den Messwiderstand 42 mit Masse 44 verbunden ist, so dass der volle Motorstrom über den Widerstand 42 fließt.

Die Drain-Anschlüsse D der Transistoren 70 und 76 sind mit dem Wicklungsanschluss 18 des Motors 10 verbunden, die D-Anschlüsse der Transistoren 72 und 78 mit dem Wicklungsanschluss 20 und die D-Anschlüsse der Transistoren 74 und 80 mit dem Anschluss 22. Wenn z. B. der Transistor 70 und der Transistor 78 leitend sind, fließt ein Strom von links nach rechts durch den Strang 12 und ein kleinerer Strom durch die Reihenschaltung der Stränge 16 und 14. Die Höhe dieser Ströme hängt wesentlich davon ab, welche Spannungen in diesen Strängen durch den rotierenden Rotor 24 (Fig. 1) induziert werden.

Die einzelnen Transistoren 70 bis 80 werden über UND-Glieder eingeschaltet. Zum Beispiel gilt gemäß Fig. 4 zwischen 0° el. und 60° el.

H1 = 1, H2 = 1, H3 = 0, oder abgekürzt HS =110.

In diesem Fall werden die Transistoren 72 bis 80 wie folgt gesteuert:

Transistoren 70, 74, 76, 78 = 0

Transistoren 72, 80 = 1

Dies geschieht über die in Fig. 2 dargestellten UND-Glieder. Bei der Kombination H1 = 1 und H3 = 0 wird der Transistor 80 eingeschaltet, und bei der Kombination H2 =1 und H3 = 0 wird der Transistor 72 eingeschaltet. Die anderen Transistoren bleiben gesperrt.

Ebenso gilt zwischen 60° el. und 120° el. HS = 101.

In diesem Fall werden die Transistoren 70 und 78 eingeschaltet, und die restlichen Transistoren 72, 74, 76 und 80 werden gesperrt.

Auf diese Weise wird der Schaltzustand der Vollbrückenschaltung 70 bis 80 jeweils nach 60° el. weitergeschaltet, damit die Wicklungsstränge 12, 14, 16 in bekannter Weise ein elektromagnetisches Drehfeld erzeugen, wie das bei solchen Motoren gängige Praxis ist.

Beim Transistor 70 ist zu diesem Zweck das Gate G über einen Widerstand 88 mit der Leitung 82 und über einen Widerstand 90 mit dem Kollektor eines npn-Transistors 92 verbunden, dessen Emitter mit Masse verbunden ist und dessen Basis über einen Widerstand 94 mit dem Ausgang eines UND-Gliedes 96 verbunden ist, das an seinem Ausgang ein positives Signal abgibt (und dadurch die Transistoren 92 und 70 leitend macht), wenn am Eingang 98 des UND-Gliedes 96 ein Signal H1 = 1 und am Eingang 100 ein Signal H2/ = 1 (entsprechend H2 = 0) liegt.

In der gleichen Weise wird der Transistor 72 von einem UND-Glied 102 leitend gesteuert, wenn an letzterem 102 die Werte H2 = 1 und H3 = 0 vorliegen.

Und der Transistor 74 wird von einem UND-Glied 104 leitend gesteuert, wenn an diesem die Signale H3 = 1 und H1 = 0 vorliegen.

Der untere Transistor 76 wird von einem UND-Glied 106 mit drei Eingängen dann leitend gesteuert, wenn H2 = 1, H1 = 0 und (an der Leitung 62) das PWM-Signal 60 = 1 ist, d. h. das PWM-Signal 60 schaltet denjenigen unteren Transistor 76, 78 oder 80 ein und aus, der gerade durch die Kombination der Signale H1, H2, H3 leitend gesteuert wird.

Zur Steuerung des Transistors 78 dient ein UND-Glied 108, das von H2 = 0, H3 = 1 und PWM-Signal 60 = 1 aktiviert wird, und zur Steuerung des Transistors 80 dient ein UND-Glied 110, das von H3 = 0, H1 = 1 und PWM-Signal 60 = 1 aktiviert wird.

Die Kommutierung gemäß Fig. 2 ist nur ein Beispiel zum besseren Verständnis der Erfindung.

**Fig. 3** zeigt die Schaltung 36 zur Bildung des Signals 50 mit der dreifachen Frequenz der Signale H1, H2, H3. Besonders vorteilhaft ist an dieser Schaltung, dass sie bis zur Drehzahl 0 herab wirksam ist, und dass durch die Verdreifachung der Frequenz eine bessere Messung der Drehzahl des Motors 10 und eine optimale Anpassung der Strombegrenzung an die augenblickliche Drehzahl dieses Motors möglich ist.

Wie Fig. 3 zeigt, sind die Stromeingänge der drei Hallgeneratoren 26, 28, 30 in Reihe geschaltet. Der obere Stromeingang des Hallgenerators 26 ist über einen Widerstand 120 mit einer Leitung 122 (z. B. +5 V) verbunden, und der untere Stromanschluss des unteren Hallgenerators 30 ist über einen Widerstand 124 mit Masse 44 verbunden. Die Widerstände 120, 124 sind bevorzugt etwa gleich groß.

Dem Hallgenerator 26 ist ein Komparator 126 zugeordnet, an dessen beide Eingänge 128 (+) und 130 (-) die beiden Ausgänge des Hallgenerators 26 angeschlossen sind. Der Ausgang 132 des Komparators 126 ist über einen Pullup-Widerstand 134 mit der positiven Leitung 122, über einen Widerstand 136 mit dem Eingang 128 und über einen Widerstand 138 mit dem negativen Eingang 140 eines Vergleichskomparators 142 verbunden.

Wie Fig. 3 zeigt, hat der Hallgenerator 28 einen Komparator 126', und der Hallgenerator 30 hat einen Komparator 126". Die Schaltung ist jeweils dieselbe, und deshalb werden dieselben Bezugszeichen verwendet, also z. B. 128, 128' und 128", und diese Teile werden nicht nochmals beschrieben.

Der positive Eingang 144 des Vergleichskomparators 142 ist über einen Widerstand 146 mit der Leitung 122 und über einen Widerstand 148 mit Masse 44 verbunden.

Der Ausgang 150 des Komparators 142 ist über einen Widerstand 152, der eine Schalthysterese bewirkt, mit dem Eingang 140 verbunden, über einen Widerstand 154 mit der Leitung 122 und über einen Widerstand 156, einen Knotenpunkt 158 und einen Widerstand 160 mit Masse 44.

An den Knotenpunkt 158 ist die Basis eines npn-Transistors 162 angeschlossen, dessen Emitter mit Masse 44 und dessen Kollektor mit einem Ausgang 164 verbunden ist, an dem eine Impulsfolge mit einer Frequenz abgenommen werden kann, welche der augenblicklichen Drehzahl $n_{ist}$ des Motors 10 proporzional ist.

**Bevorzugte Werte für Fig. 3**

| k = kOhm; M = MOhm | |
|---|---|
| Komparatoren 126, 126', 126", 142 | ... 4 x LM 2901 |
| Widerstände 120, 124 | ... 200 Ohm |
| Widerstände 136, 136', 136" | ... 220 k |
| Widerstände 134, 134', 134", 154, | ... 3,3 k |
| Widerstände 138, 138', 138", 146, 148, 156 | ... 33 k |
| Widerstand 152 | ... 1 M |
| Widerstand 160 | ... 10 k |

**Arbeitsweise von Fig. 3**

Die beiden Widerstände 146, 148, welche gleich groß sind, legen den Eingang 144 des Komparators 142 auf etwa +2,5 V.

Im Bereich 0 ... 60° el. ist gemäß Fig. 4 H1 = 1, H2 = 1, H3 = 0. Folglich liegt der Ausgang des Komparators 126" auf Masse, und die Ausgänge der Komparatoren 126, 126' liegen nicht auf Masse, so dass über die Widerstände 134, 138 und 134', 138' ein Strom von der Leitung 122 zum Punkt 140 und von dort über den Widerstand 138" nach Masse 44 fließt. Dadurch ergibt sich gemäß Fig. 4D am Punkt 140 ein Potenzial von etwa zwei Dritteln der Spannung U = 5 V, und der Vergleichskomparator 142 erhält an seinem Ausgang 150 ein hohes Signal, das in Fig. 4E mit 1 bezeichnet ist.

Im Bereich 60 ... 120° el. gilt gemäß Fig. 4 H1 = 1, H2 = 0, H3 = 0, d. h. die Ausgänge der Komparatoren 126', 126" liegen auf Masse, und der Ausgang des Komparators 126 ist hochohmig. Nun fließt ein Strom von der Leitung 122 über die Widerstände 134, 138 zum Punkt 140 und von dort über den Widerstand 138' nach Masse, ebenso über den Widerstand 138" nach Masse. Dadurch ergibt sich gemäß Fig. 4D am Punkt 140 ein Potenzial von etwa einem Drittel der Spannung U = 5 V, und der Vergleichskomparator 142 erhält folglich an seinem Ausgang 150 ein niedriges Signal, das in Fig. 4E mit 0 bezeichnet ist.

Auf diese Weise springt jeweils nach 60° el. das Potenzial am Ausgang 150 entweder von 0 nach 1 oder von 1 nach 0, und man erhält dort das Signal 50, dessen Frequenz dreimal so hoch ist wie die Frequenz der Signale H1 etc. Dieses Signal steht auch am Ausgang 164 zur Verfügung, z. B. für eine Überwachung der Drehzahl des Motors 10. Eine solche Überwachung wird von vielen Kunden verlangt.

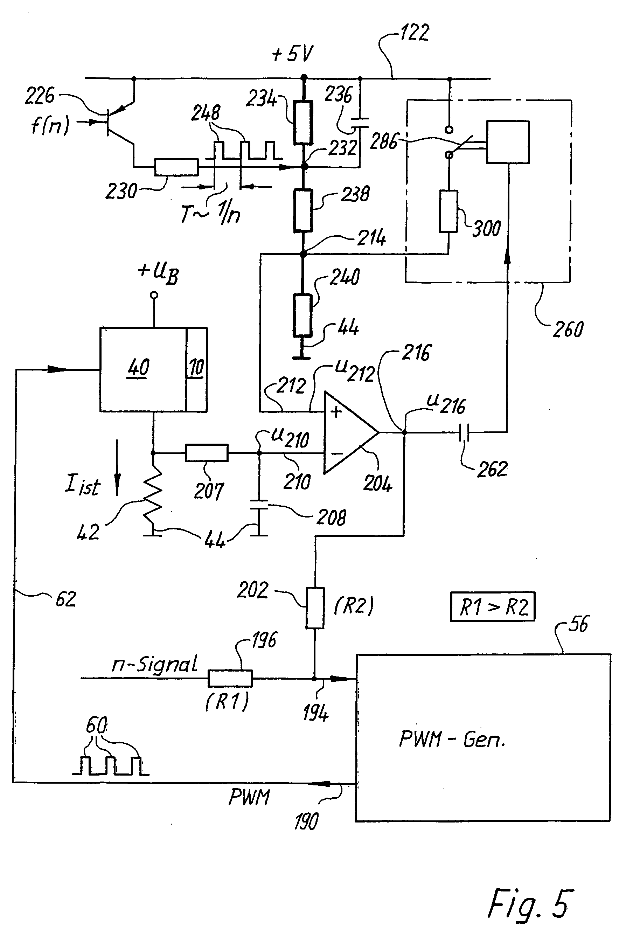

**Fig. 5** ist eine Übersichtsdarstellung zur Erläuterung der Grundzüge der Erfindung. Die Spannung am Messwiderstand 42 wird über einen Widerstand 207 und einen Glättungskondensator 208 dem Minuseingang 210 eines Komparators 204 zugeführt, dessen Ausgang mit 216 bezeichnet ist. Der Pluseingang 212 des Komparators 204 ist mit einem Knotenpunkt 214 verbunden, dessen Potenzial die Obergrenze des Stromes im Motor 10, also dessen verfügbare Leistung, bestimmt. Wird diese Obergrenze überschritten, so wird automatisch das Tastverhältnis von Impulsen 60 reduziert, die von einem PWM-Generator 56 erzeugt werden.

Der Knotenpunkt 214 ist über einen Widerstand 240 mit Masse 44 verbunden, über einen Widerstand 238 mit einem Knotenpunkt 232, und über einen Widerstand 300 mit dem Schalter 286 eines Zeitglieds 260, das über einen Kondensator 262 mit dem Ausgang 216 des Komparators 204 verbunden ist.

Der Knotenpunkt 232 ist über einen Widerstand 234 und einen zu diesem parallelen Kondensator 236 mit der Leitung 122 verbunden. Ferner ist er über einen Widerstand 230 mit dem Kollektor eines pnp-Transistors 226 verbunden, dessen Emitter mit der Leitung 122 verbunden ist und zu dessen Basis ein drehzahlabhängiges Signal f (n) zugeführt wird.

Der Ausgang 216 ist über einen Widerstand 202 (mit dem Wert R2) mit dem Eingang des PWM-Generators 56 verbunden, dem auch über einen Widerstand 196 (mit dem Wert R1) ein drehzahlbestimmendes Signal "n-Signal" zugeführt wird, gewöhnlich von einem Drehzahlregler oder einer manuellen Drehzahleinstellung. Der Widerstandswert R1 ist wesentlich größer als R2. Nachfolgend werden typische Werte angegeben, aus denen sich ein bevorzugtes Verhältnis von R1 zu R2 ergibt.

Der PWM-Generator 56 liefert an einem Ausgang 190 das PWM-Signal 60, das über die Leitung 62 (vgl. Fig. 1 und 2) der Kommutierungssteuerung 40 zugeführt wird.

**Arbeitsweise von Fig. 5**

Solange das Potenzial u210 am Eingang 210 des Komparators 204 niedriger ist als das Potenzial u212 an dessen Eingang 212, ist der Ausgang 216 des Komparators 204 hochohmig und hat keinen Einfluss auf die an ihn angeschlossenen Module 56 und 260. Dies ist der Fall, solange der Motorstrom $I_{ist}$ kleiner als ein oberer Grenzwert ist, welcher durch das Potenzial $u_{212}$ des Punktes 214 vorgegeben wird.

Dieses Potenzial wird seinerseits bestimmt durch das Verhältnis der Widerstände 234, 238, 240, und durch einen drehzahlabhängigen Strom 248, der über den Transistor 226 und den Widerstand 230 zum Knotenpunkt 232 fließt, wobei das Potenzial am Punkt 232 durch den Kondensator 236 geglättet wird. Das Potenzial $u_{212}$ am Punkt 214, und folglich auch die Obergrenze des Stromes Iist, steigen also mit zunehmender Drehzahl an.

Wird der Strom Iist zu groß, so kippt der Komparator 204, und sein Ausgang 216 wird mit Masse 44 verbunden. Die dabei auftretende Potenzialänderung am Ausgang 216 wird über den Kondensator 262 auf das Zeitglied 260 übertragen und schaltet, z.B. während einer Sekunde, den Schalter 286 ein, so dass der Widerstand 300 zu den Widerständen 234, 238 parallel geschaltet wird und das Potenzial $u_{212}$ des Punktes 214 während dieser Sekunde angehoben wird, so dass der Ausgang 216 des Komparators 204 sofort wieder hochohmig wird und der Strom Iist weiter ansteigen kann. Nach Ablauf dieser Sekunde öffnet der Schalter 286, und das Potenzial u212 am Knotenpunkt 214 sinkt wieder, wodurch der Strom Iist wieder auf einen niedrigeren Wert begrenzt wird. Falls hierbei der Ausgang 216 mit Masse verbunden wird, fließt ein Strom vom Eingang 194 über den Widerstand 202 und den Komparator 204 nach Masse 44, wodurch das Potenzial des Eingangs 194 schlagartig reduziert wird. Dadurch wird auch das Tastverhältnis pwm (Gleichung 1) des PWM-Signals 60 sofort reduziert, um den Motorstrom Iist zu reduzieren und ihn unterhalb der gewünschten Obergrenze zu halten. Die Frequenz des Signals 60 bleibt hierbei unverändert, was ein wichtiger Vorteil ist.

Damit die Anhebung des Potenzials am Punkt 232 und damit auch am Punkt 214 möglichst groß ist, wird der Widerstand 234 bevorzugt wesentlich größer als die Summe aus den Widerständen 238 und 240 gewählt. Der Spannungsverlust am Strommesswiderstand 42 wird möglichst klein gehalten. Somit ist auch der Potenzialwert $u_{212}$ am Punkt 214 für die Stromobergrenze $I_{soll}$ klein, und durch die Parallelschaltung des Widerstands 300 ist problemlos eine Verdoppelung der Stromobergrenze $I_{soll}$ möglich, falls das gewünscht wird.

Beim Start ist der Kondensator 236 entladen und wirkt dann wie ein Kurzschluss des Widerstands 234, so dass beim Start das Potenzial $u_{212}$ des Knotenpunkts 214 so lange angehoben wird, bis sich der Kondensator 236 aufgeladen hat. Dadurch kann der Startstrom des Motors 10 kurzzeitig stark erhöht werden, um einen sicheren Anlauf zu gewährleisten, wie das in Fig. 7 bei 252 dargestellt ist. Eine länger andauernde Erhöhung ist mit der Variante nach den Fig. 11 und 12 möglich.

Ein wichtiger Aspekt der vorliegenden Erfindung ist also der Spannungsteiler 234, 238, 240, dem, abhängig von Motorparametern, von außen Signale verschiedener Art zugeführt werden, um die verfügbare Leistung des Motors 10 optimal auszunutzen oder zu begrenzen. Naturgemäß stellen die verschiedenen beschriebenen externen Einflüsse auf diesen Spannungsteiler nur Beispiele für die vielfältigen Möglichkeiten dar, welche dieses Prinzip bietet.

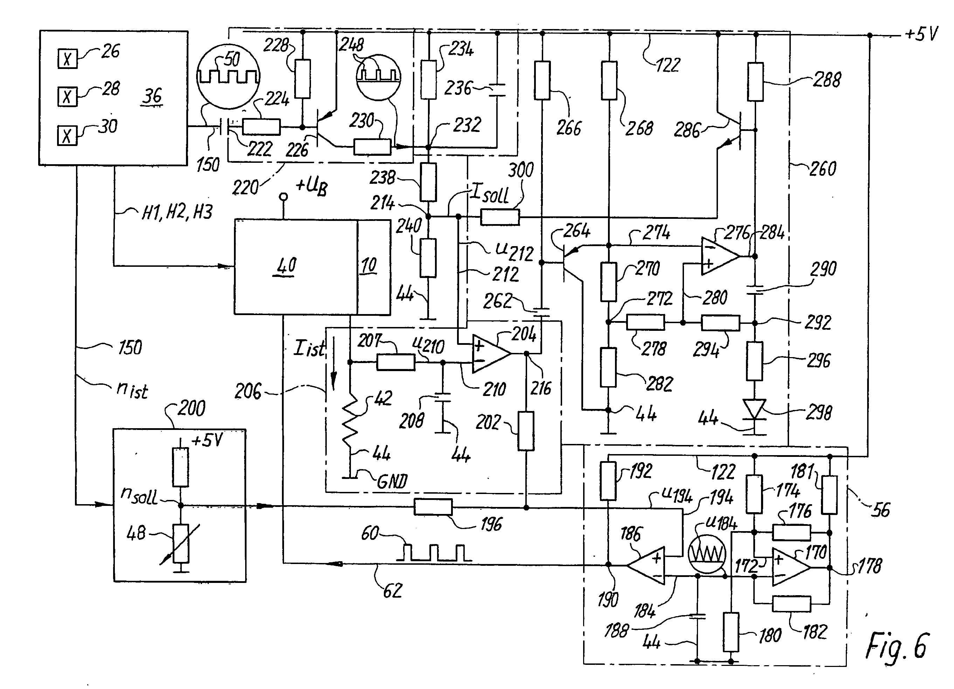

**Fig. 6** zeigt Einzelheiten einer bevorzugten Ausführungsform der Fig. 5. Für gleiche oder gleich wirkende Teile wie in Fig. 5 werden dieselben Bezugszeichen verwendet wie dort. Der PWM-Generator 56 enthält einen Dreiecksgenerator mit einem Komparator 170, dessen Pluseingang 172 über einen Widerstand 174 mit der Leitung 122 (+5 V), über einen Widerstand 176 mit dem Ausgang 178, und über einen Widerstand 180 mit Masse 44 verbunden ist. Der Ausgang 178 ist über einen Widerstand 181 mit der Leitung 122 und über einen Widerstand 182 mit dem Minuseingang 184 verbunden, der auch mit dem Minuseingang eines Komparators 186 und über einen Kondensator 188 mit Masse 44 verbunden ist. Am Ausgang 190 des Komparators 186 wird das PWM-Signal 60 erzeugt. Der Ausgang 190 ist über einen Pullup-Widerstand 192 mit der Leitung 122 verbunden.

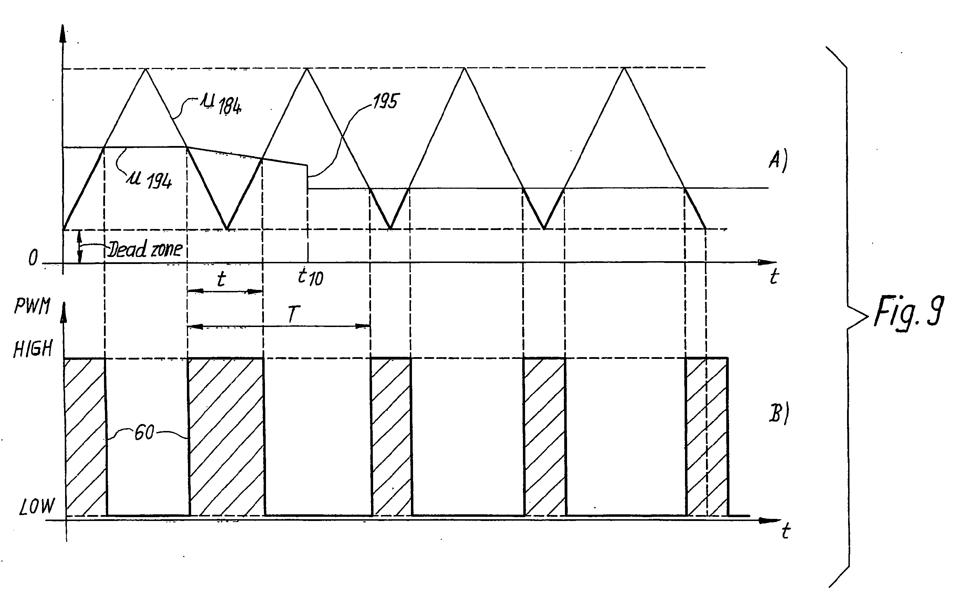

Der Komparator 170 mit seinen verschiedenen Schaltelementen erzeugt eine Dreieckspannung $u_{184}$ (vgl. Fig. 9) mit z. B. 25 kHz am Eingang 184, und diese wird dem Komparator 186 zugeführt.

Dem Pluseingang 194 wird - als Potenzial $u_{194}$ - über den Widerstand 196 z.B. das Ausgangssignal eines Drehzahlreglers 200 zugeführt, der nur schematisch angedeutet ist, und über den Widerstand 202 ist der Eingang 194 mit dem Ausgang des Komparators 204 verbunden, der Bestandteil einer Anordnung zur Strombegrenzung ist.

Über den Widerstand 207 und den Siebkondensator 208 wird die vom Motorstrom Iist bestimmte Spannung

am Messwiderstand 42 dem Minuseingang 210 des Komparators 204 zugeführt, wie bereits bei Fig. 5 beschrieben. Sein Pluseingang 212 liegt an dem Knotenpunkt 214, und das dortige Potenzial $u_{212}$ bestimmt den Strom $I_{soll}$, bei dem die Strombegrenzungsanordnung aktiviert wird: Ist das Potenzial am Punkt 214 hoch, so wird der Strom auf einen hohen Wert begrenzt, und ist es niedrig, auf einen niedrigen Wert.

Wenn nämlich der Strom $I_{ist}$ so hoch wird, dass das Potenzial $u_{210}$ des Eingangs 210 höher wird als das Potenzial $u_{212}$ des Eingangs 212, so kippt der Komparator 204, und sein Ausgang 216 geht auf Massepotenzial, so dass vom Eingang 194 ein Strom über den Widerstand 202 nach Masse fließt, wodurch das Potenzial $u_{194}$ am Eingang 194 des Komparators 186 sprunghaft abnimmt, folglich das Tastverhältnis pwm der Impulse 60 kleiner wird, und dadurch der Strom $I_{ist}$ reduziert wird, da die Transistoren 76, 78, 80 mit diesem Tastverhältnis aus- und eingeschaltet werden, wie bei Fig. 2 beschrieben.

**Fig. 9** zeigt die Dreieckspannung $u_{184}$, welche vom Komparator 170 geliefert wird, der als Dreiecksgenerator dient. Diese Dreieckspannung wird im Komparator 186 verglichen mit dem Potenzial $u_{194}$ am Eingang 194 dieses Komparators.

Wenn der Motorstrom $I_{ist}$ zum Zeitpunkt $t_{10}$ höher wird als der vorgegebene Wert $I_{soll}$, kippt der Komparator 204, sein Ausgang 216 wird LOW, und über den Widerstand 202 fließt ein Strom nach Masse 44, so dass das Potenzial $u_{194}$ zum Zeitpunkt $t_{10}$ einen Sprung 195 nach unten macht.

Dadurch werden, wie in Fig. 9B dargestellt, die Impulse des PWM-Signals 60 ab dem Zeitpunkt $t_{10}$ kürzer, und folglich nimmt der Motorstrom $I_{ist}$ so lange ab, bis er wieder kleiner ist als $I_{soll}$. Wenn dies der Fall ist, kippt der Komparator 204 wieder in seinen anderen Zustand, bei dem sein Ausgang 216 hochohmig ist, und über den Widerstand 202 fließt kein Strom mehr.

Eine negative Potenzialänderung am Ausgang 216 bewirkt ein Einschalten eines Transistors 264 und eine vorübergehende Erhöhung der Strom-Obergrenze $I_{soll}$, wie in Fig. 7 bei 304 dargestellt, und in diesem Fall nimmt die Länge der Impulse 60 vorübergehend wieder zu.

Die Steuerung nur über das Tastverhältnis pwm der Impulse 60 bei Verwendung einer festen Frequenz für das PWM-Signal 60 ist sehr vorteilhaft, da z.B. ständig bei 20 kHz oder höher gearbeitet werden kann. Diese Frequenz liegt außerhalb des Hörbereichs des Menschen, und der Motor 10 wird dadurch leiser.

Zur drehzahlabhängigen Erhöhung des Potenzials am Punkt 214 (vgl. Fig. 8) dient eine Anordnung 220. Über die Reihenschaltung eines Kondensators 222 und eines Widerstands 224 werden die Impulse 50 (mit dreifacher Frequenz) der Basis eines pnp-Transistors 226 zugeführt, die über einen Widerstand 228 mit der Leitung 122 verbunden ist ebenso wie der Emitter des Transistors 226. Der Kollektor dieses Transistors 226 ist über einen Widerstand 230 mit einem Knotenpunkt 232 verbunden, der über einen Widerstand 234 und einen dazu parallelen Kondensator 236 mit der Leitung 122 (+5 V) verbunden ist. Ebenso ist der Knotenpunkt 232 über einen Widerstand 238 mit dem Knotenpunkt 214 verbunden, und letzterer ist über einen Widerstand 240 mit Masse 44 verbunden.

Die Widerstände 234 (430 k), 238 (100 k) und 240 (8,2 k) bilden einen Spannungsteiler, und im steady-state, wenn auf den Spannungsteiler keine äußeren Einflüsse wirken, hat Masse 44 ein Potenzial von 0 V, der Knotenpunkt 214 von 0,076 V, der Knotenpunkt 232 von 1 V und die Leitung 122 von +5 V.

Das Potenzial $u_{212}$ am Punkt 214 bestimmt die Strom-Obergrenze, auf die der Motorstrom list begrenzt wird, z. B. gemäß Fig. 8 im Dauerbetrieb bei 10.000 U/min auf etwa 4,2 A. Dieses Potenzial $u_{212}$ wird dem Plusanschluss 212 des Komparators 204 zugeführt, und wenn es niedrig ist, schaltet der Komparator 204 bereits bei einem niedrigen Strom $I_{ist}$ um und reduziert das Potenzial $u_{194}$ am Eingang 194 des Komparators 186, wodurch das Tastverhältnis pwm (Gleichung 1) der Impulse 60 bereits bei einem niedrigen Motorstrom $I_{ist}$ reduziert wird.

**Anhebung der Stromgrenze abhängig von der Drehzahl**

Durch die Anordnung 220 (Fig. 6) wird bei jedem Impuls 50 (Fig. 4E) ein Stromimpuls 248 mit konstanter Impulsbreite erzeugt. Für die konstante Impulsdauer der Stromimpulse 248 ergibt sich eine besonders vorteilhafte Lösung durch die Beschaltung der Basis des Transistors 226 mit dem Kondensator 222, dem Widerstand 224 und dem Widerstand 228. Die Impulsdauer ergibt sich aus dem Produkt aus dem Wert der Kapazität des Kondensators 222 und der Summe der Werte der Widerstände 224 und 228, also C222*(R224+R228). Die Stromimpulse 248 werden dem Knotenpunkt 232 zugeführt, so dass ein zusätzlicher Strom 248 durch die Widerstände 238, 240 fließt und das Potenzial des Punktes 214 erhöht. Dieser zusätzliche Strom 248 fließt aber dann nicht, wenn der Motor 10 blockiert ist, und auf diese Weise ergibt sich bei blockiertem Motor ein niedriger Motorstrom.

Da mit zunehmender Drehzahl pro Zeiteinheit mehr Impulse 50 und 248 erzeugt werden, steigt dieser zusätzliche Strom durch die Widerstände 238, 240 mit zunehmender Drehzahl an, so dass die Strom-Obergrenze mit zunehmender Drehzahl ansteigt.

Damit das Potenzial am Punkt 232 und damit auch am Punkt 214 dabei möglichst stark erhöht wird, wird der Widerstand 234 bevorzugt sehr viel größer als die Summe der Widerstände 238 und 240 gewählt.

**Dynamische Stromerhöhung bei Laststößen**

Ein ECM 10 wird so ausgelegt, dass er eine Leistungsreserve hat, d. h., wenn ihm nur kurzzeitig eine erhöhte Leistung abgefordert wird, hat dies kaum einen Einfluss auf seine Temperatur. Würde dieselbe erhöhte Leistung aber dauernd dem Motor 10 abverlangt, so würde das zu seiner Überhitzung und Zerstörung führen.

Deshalb kann man in sehr bevorzugter Weise bei Laststößen eine dynamische Stromerhöhung verwenden. Hierzu dient der Teil 260 der Fig. 6, dessen Funktion bei Fig. 5 bereits erläutert wurde.

Der Ausgang 216 des Komparators 204 ist über einen Kondensator 262 mit der Basis eines pnp-Transistors 264 verbunden, die ihrerseits über einen Widerstand 266 mit der Leitung 122 verbunden ist. Der Kollektor des Transistors 264 ist mit Masse 44 verbunden. Sein Emitter ist über einen Widerstand 268 mit der Leitung 122, über einen Widerstand 270 mit einem Knotenpunkt 272, und direkt mit dem Minuseingang 274 eines Komparators 276 verbunden. Der Knotenpunkt 272 ist über einen Widerstand 278 mit dem Pluseingang 280 des Komparators 276 und über einen Widerstand 282 mit Masse 44 verbunden.

Der Ausgang 284 des Komparators 276 ist mit der Basis eines npn-Transistors 286, ferner über einen Widerstand 288 mit der Leitung 122 und über einen Kondensator 290 mit einem Knotenpunkt 292 verbunden, der seinerseits über einen Widerstand 294 mit dem Pluseingang 280 und über die Reihenschaltung eines Widerstands 296 und einer Diode 298 mit Masse 44 verbunden ist.

Der Kollektor des Transistors 286 ist mit der Leitung 122 verbunden, sein Emitter über den Widerstand 300 mit dem Knotenpunkt 214.

Wenn der Transistor 286 leitend ist, wird der Widerstand 300 (180 k) zur Reihenschaltung der Widerstände 234 und 238 parallel geschaltet, wodurch das Potenzial $u_{212}$ am Punkt 214 auf einen höheren Wert springt und die Strom-Obergrenze gemäß Fig. 7 z.B. von 3,5 auf 5,5 A angehoben wird.

Wenn der Motorstrom $I_{ist}$ zu hoch ist, kippt der Komparator 204 auf Low, und diese Potenzialänderung wird über den Kondensator 262 auf die Basis des pnp-Transistors 264 übertragen und macht ihn leitend, so dass er die Widerstände 270, 282 überbrückt und den Komparator 276 umschaltet, der als Monoflop geschaltet ist. Der Transistor 264 unterdrückt die positiven Impulse, die beim Differenzieren durch den Kondensator 262 entstehen, so dass nur die negativen Impulse ein Umschalten des Komparators 276 bewirken können.

Der Ausgang 284 des Komparators 276 liegt im Ruhezustand auf Low. Wird der Monoflop getriggert, so wird der Ausgang 284 so lange High, wie das durch die Bauelemente 290, 296, 298 festgelegt ist, und kippt danach wieder auf Low zurück.

Solange der Ausgang 284 hoch ist, wird der Transistor 286 eingeschaltet, und über ihn und den Widerstand 300 fließt ein zusätzlicher Strom zum Knotenpunkt 214, wie bereits beschrieben. Dabei wirkt der Transistor 286 wie ein idealer Schalter, d.h. der Widerstand 300 wird vom Punkt 214 entkoppelt, wenn der Transistor 286 sperrt.

Die Zeit, während der der Ausgang 284 hoch ist, beträgt hier ca. 1 Sekunde, und an sie schließt sich jeweils eine Zeit von mindestens 4 Sekunden an, in der der Ausgang 284 Low ist, so dass man gemäß Fig. 7 kurze Abschnitte 304 mit höherem Strom hat, die durch lange Abschnitte 306 mit niedrigerem Strom voneinander getrennt sind. Dies verhindert eine Überlastung des Motors 10, erlaubt aber eine Anpassung an kurzzeitige Laststöße, wie sie bei manchen Antrieben vorkommen können.

Wenn der Rotor 24 des Motors 10 blockiert ist, ist die Strombegrenzungsanordnung ständig aktiv, d. h. der Komparator 204 ist dauernd gekippt, so dass über den Kondensator 262 keine Impulse übertragen werden und die Schaltung 260 nicht aktiviert wird.

Wenn der Rotor 24 blockiert ist, werden keine Impulse 50 mehr erzeugt, so dass auch keine Stromimpulse 248 mehr erzeugt werden. Der Strom sinkt dann gemäß dem Abschnitt 308 der Fig. 7 und wird im Stillstand auf einen niedrigen Wert 310 begrenzt, so dass eine Überhitzung des ECM 10 im blockierten Zustand vermieden wird.

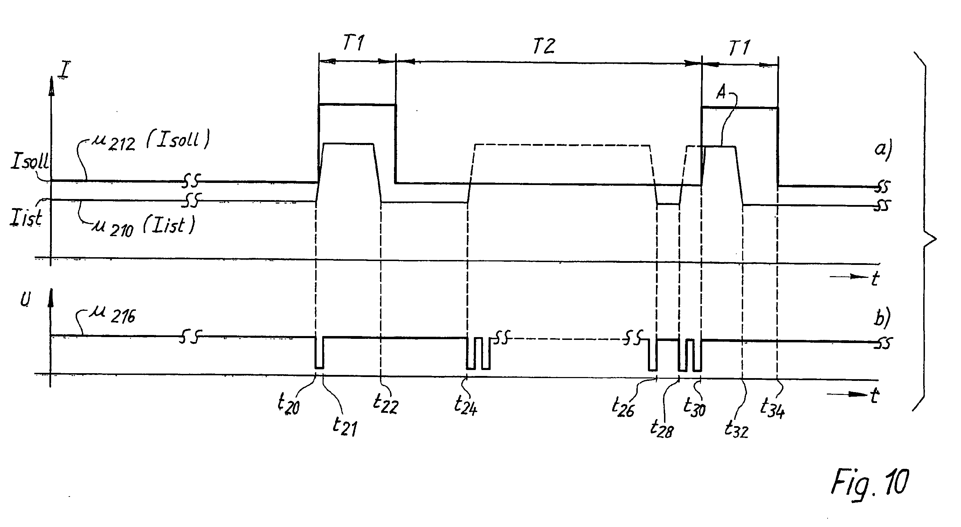

**Fig. 10** zeigt für die Fig. 5 und 6 eine schematisierte Darstellung des Motorstroms $I_{ist}$, dargestellt durch das Potenzial $u_{210}$ am Eingang 210 des Komparators 204, und der Strom-Obergrenze $I_{soll}$, dargestellt durch das Potenzial $u_{212}$ am Eingang 212 des Komparators 204, sowie das Potenzial $u_{216}$ am Ausgang 216 des Komparators 204, bei einer Überschreitung der Strom-Obergrenze $I_{soll}$.

Zum Zeitpunkt $t_{20}$ wird die Strom-Obergrenze $I_{soll}$ überschritten. Dadurch schaltet der Komparator 204 auf LOW, und die Monoflop-Schaltung 260 wird aktiviert, vgl. Beschreibung zu Fig. 5, so dass die Strom-Obergrenze $I_{soll}$ für die durch die Monoflop-Schaltung 260 bestimmte Zeitdauer $T_1$, z.B. 1 Sekunde, erhöht wird. Dadurch wird zum Zeitpunkt t21 das Potenzial $u_{216}$ wieder hoch.

Zum Zeitpunkt $t_{22}$ ist der Motorstrom Iist auf Normalniveau zurückgekehrt, da z.B. die kurzzeitige Extralast bzw. Störung nicht mehr vorliegt. Nach der Zeitspanne $T_1$ wird die Monoflop-Schaltung 260 deaktiviert, und die Strom-Obergrenze $I_{soll}$ kehrt wieder auf den ursprünglichen Wert zurück. Bis zum Zeitpunkt $t_{24}$ treten keine weiteren Stromüberschreitungen auf.

Zum Zeitpunkt $t_{24}$ wird die Stromobergrenze $I_{soll}$ erneut überschritten, und der Ausgang 214 wird auf LOW geschaltet. Da die Monoflop-Schaltung 260 nach Ablauf der Erhöhung der Strom-Obergrenze während einer Zeitdauer

$T_2$, z.B. 4 Sekunden, keine weitere Erhöhung erlaubt, um den Motor vor Überhitzung zu schützen, hat dies bis zum Zeitpunkt $t_{26}$ keinen Effekt. Der Motorstrom $I_{ist}$ kann nicht weiter ansteigen. Zwischen $t_{24}$ und $t_{26}$ wechselt das Potenzial u216 wie dargestellt ständig zwischen High und Low, da hier die Strombegrenzung auf den aktuellen Wert von $I_{soll}$ wirksam ist.

Zum Zeitpunkt $t_{26}$ fällt der Motorstrom $I_{ist}$ bei diesem Beispiel wieder unter die Stromobergrenze $I_{soll}$, und der Ausgang 216 geht wieder auf HIGH.

Zum Zeitpunkt $t_{28}$ wird die Strom-Obergrenze $I_{soll}$ erneut überschritten. Da die Zeitspanne $T_2$ noch nicht abgelaufen ist, wird die Strom-Obergrenze nicht erhöht. Dies geschieht erst wieder zum Zeitpunkt $t_{30}$, an dem die Zeitdauer $T_2$ abgelaufen ist. Ab $t_{30}$ wird die Strom-Obergrenze $I_{soll}$ erneut während der Zeitdauer $T_1$ erhöht. Somit kann der Motorstrom list kurzfristig wieder auf einen höheren Wert ansteigen, wie bei A dargestellt.

Zum Zeitpunkt $t_{32}$ sinkt der Motorstrom $I_{ist}$ wieder in den normalen Bereich, und deshalb wird das Potenzial $u_{216}$ wieder ständig hoch. Zum Zeitpunkt $t_{34}$ endet die Zeitspanne $T_1$, und die Strom-Obergrenze wird wieder auf den normalen Wert gesenkt

Die Wirkungsweise der Anordnung nach Fig. 5 und 6 beruht zum Teil darauf, dass das Potenzial $u_{212}$ am Knotenpunkt 214, welches die Strom-Obergrenze festlegt, abhängig von bestimmten Betriebsbedingungen modifiziert wird, so dass es entweder höher oder niedriger wird und folglich der Motorstrom, abhängig von Betriebsparametern des Motors, automatisch auf verschiedene Werte begrenzt wird, um das Leistungsvermögen des ECM 10 möglichst optimal auszunutzen.

**Fig. 8** zeigt als Beispiel die Anhebung der oberen Stromgrenze bei einem Motor, der für eine Drehzahl von etwa 10.000 U/min ausgelegt ist.

Bei blockiertem Motor (Drehzahl n = 0) wird der Motorstrom auf einen Wert von etwa 1,4 A begrenzt. Die Strom-Obergrenze Iw = f(n) steigt bei 10.000 U/min auf etwa 4,2 A an. Im oberen Bereich wird die Kurve flacher und erreicht ein Plateau, und dieser flache Bereich wird durch Auswahl der elektrischen Bauelemente 222, 224, 228, 230 in die Nähe der Nenndrehzahl des Motors gelegt.

Fig. 8 zeigt ferner die Kurve $I_{wmax}$ , die der erhöhten Strom-Obergrenze entspricht, die sich durch die Aktivierung des Monoflop 260 ergibt. Bei 10.000 U/min erhöht sich hierdurch z.B. die Strom-Obergrenze von etwa 4,2 auf etwa 4,8 A, und entsprechend nimmt das Drehmoment M zu, das in Fig. 8 auf der linken Skala dargestellt ist und das dem tatsächlichen Motorstrom proportional ist. Da ein Außenläufermotor bei 10.000 U/min durch die erzeugte Luftverwirbelung gut gekühlt wird, kann er bei dieser Drehzahl eine wesentlich höhere Verlustwärme abführen als im Stillstand, und deshalb kann bei 10.000 U/min der zulässige Motorstrom wesentlich höher sein als bei blockiertem Motor. Auf diese Weise wird es möglich, mit einem Motor vorgegebener Größe höhere Drehzahlen und damit eine höhere Leistung zu erreichen.

Im Rahmen der Erfindung ist es auch möglich, bei blockiertem Motor den Motorstrom zeitweilig komplett abzuschalten und in regelmäßigen Zeitabständen einen neuen Anlauf zu versuchen.

Der Kondensator 236 am Knotenpunkt 232 bewirkt eine Glättung des Potenzials an diesem Punkt und bewirkt so einen stabilen Sollwert am Komparator 204.

Die Anordnung 220 ist also besonders günstig bei Außenläufermotoren, kann aber selbstverständlich bei allen Motoren verwendet werden, bei denen die Kühlung mit steigender Drehzahl besser wird.

## Stromerhöhung beim Einschalten

Der Kondensator 236 (1,5 μF) hat zusätzlich die Funktion, dass er beim Einschalten entladen ist und dann kurzzeitig wie ein Kurzschluss für den Widerstand 234 wirkt. Dadurch wird das Potenzial am Knotenpunkt 232 kurzzeitig auf +5 V angehoben, und das Potenzial am Knotenpunkt 214 steigt auf 0,38 V, so dass der Strom $I_{ist}$ auf einen hohen Wert begrenzt wird. Dies zeigt Fig. 7 bei 252, wo nach dem Einschalten die Stromgrenze innerhalb von 0,5 Sekunden von 7 A auf 5,5 A fällt, so dass der Motor 10 mit einem sehr hohen Drehmoment starten kann, das aber rasch reduziert wird.

Für die Zeitdauer $t_{START}$ des Startimpulses gilt annähernd:

$$t_{START} = C_{236} * R_{234} * (R_{238} + R_{240}) / (R_{234} + R_{238} + R_{240}) \qquad (2)$$

**Bevorzugte Werte der Bauelemente in Fig. 6**

| Spannung an der Leitung 122: +5 V, geregelt. Motor mit 10.000 U/min | |
|---|---|
| Nenndrehzahl. k = kOhm, M = MOhm | |
| Kondensator 222 | ... 3,3 nF |
| Widerstand 224, 228 | ... 51 k |
| Transistoren 226, 264 | ... BC857 |
| Transistor 286 | ... BC847 |
| Komparatoren 170, 186, 204, 276 | ... 4 x LM2901 |
| Widerstand 230 | ... 11 k |
| Widerstand 234 | ... 430 k |
| Widerstände 180, 238 | ... 100 k |
| Widerstand 240 | ... 8,2 k |
| Widerstand 42 | ... 0,082 Ohm |
| Widerstand 206 | ... 1 k |
| Kondensator 208 | ... 1 nF |
| Widerstand 196 | ... 33 k |
| Widerstände 181, 192, 202, 288 | ... 10 k |
| Kondensator 188 | ... 220 pF |
| Widerstand 182 | ... 75 k |
| Widerstand 176 | ... 33 k |
| Widerstand 174 | ... 62 k |
| Kondensator 262 | ... 33 nF |
| Widerstand 266 | ... 22 k |
| Widerstand 268 | ... 45 k |
| Widerstand 270 | ... 3 k |
| Widerstand 282 | ... 2 k |
| Widerstände 278, 294 | ... 1 M |
| Kondensator 290 | ... 1 µF |
| Widerstand 296 | ... 620 k |
| Diode 298 | ... 1N4148 |
| Kondensator 236 | ... 1,5 µF |
| Widerstand 300 | ... 180 k |

**Fig. 11** zeigt eine bevorzugte Variante, wie das von der Schaltung 36 (Fig. 3) an ihrem Ausgang 150 gebildete drehzahlabhängige Signal 50 (Fig. 4E) dem Knotenpunkt 232 für eine Schaltung gemäß Fig. 5 oder Fig. 6 zugeleitet wird. Diese Variante unterscheidet sich durch die beiden Bauelemente 231, 233 von Fig. 6. Die übrigen Bauelemente sind weitgehend identisch mit Fig. 6 und werden deshalb nicht nochmals beschrieben. Die Basis des pnp-Transistors 226 ist bei Fig. 11 über die Serienschaltung eines Widerstands 231 und eines Kondensators 233 mit Masse 44 verbunden.

Beim Start wird der (zuvor entladene) Kondensator 233 über die Widerstände 228 und 231 geladen. Die während dieser Aufladung am Widerstand 228 abfallende Spannung macht den Transistor 226 zeitweilig leitend und schaltet dadurch den Widerstand 230 parallel zum Widerstand 234, so dass das Potenzial am Punkt 232 während dieser Zeit stark angehoben wird. Die Zeitdauer $T_{start233}$ dieser Erhöhung ergibt sich ungefähr aus

$$T_{start233} = (R_{228} + R_{231}) * C_{233} \qquad\qquad (3)$$

Anschließend werden über den Widerstand 230 dem Knotenpunkt 232 Impulse 248 (Fig. 6) mit drehzahlabhängiger Frequenz zugeführt, um mit steigender Drehzahl die Strom-Obergrenze zu erhöhen, wie bei Fig. 5 und 6 beschrieben und in Fig. 8 dargestellt. Während $T_{start233}$ hat der Wert $I_{soll}$ (welcher durch das Potenzial am Punkt 214 definiert ist) eine Erhöhung in Form eines Plateaus 239 (Fig. 12), die der Erhöhung durch den Kondensator 236 überlagert ist, und über die eine längere Starterhöhung der Strom-Obergrenze $I_{soll}$ erreichbar ist. Dies ermöglicht die Beschleunigung größerer träger Massen, und der erhöhte Strom ermöglicht ein großes dynamisches Anlaufmoment.

Gleichzeitig wird der Motor bei einer Blockierung geschützt, da dann der Transistor 226 gesperrt und der Motorstrom list auf einen kleinen Wert begrenzt wird (vgl. Fig. 7).

**Bevorzugte Werte der Bauelemente In Fig. 11**

| Betriebsspannung +5 V; k = kOhm | |
|---|---|
| Kondensator 222 | ... 1 nF |
| Widerstand 224 | ... 200 k |
| Transistor 226 | ... BC857 |
| Kondensator 233 | ... 1,5 µF |
| Widerstände 228, 231, 234 | ... 430 k |

Die Erfindung betrifft also ein Verfahren zum Betreiben eines ECM 10, welcher mit einer Strombegrenzungsanordnung versehen ist. Diese wirkt auf eine PWM-Steuerung, welche im Betrieb PWM-Impulse mit steuerbarem Tastverhältnis pwm und einer im wesentlichen konstanten Frequenz abgibt, Bei Überschreiten einer vorgegebenen Obergrenze $I_{soll}$ des Motorstroms bewirkt die Strombegrenzungsanordnung eine Veränderung des Tastverhältnisses pwm bei den von der PWM-Steuerung 56 abgegebenen Impulsen 60, um den Motorstrom zu reduzieren. Wenn bei rotierendem ECM der Motorstrom einen vorgegebenen oberen Grenzwert $I_{soll}$ überschreitet, wird dieser Grenzwert während einer vorgegebenen Zeitspanne 304 (Fig. 7) erhöht, und dadurch wird bei einer Lastspitze die maximal verfügbare Motorleistung zeitweilig erhöht, gewöhnlich im Bereich von einigen Sekunden. Bei blockiertem Rotor 24 wird der Grenzwert nicht erhöht, sondern weiter abgesenkt. - In bevorzugter Weise wird der obere Grenzwert $I_w$ auch abhängig von der Drehzahl n des Motors bis zu einem Plateau erhöht, wie in Fig. 8 dargestellt. - Die vorstehenden Maßnahmen können einzeln oder in beliebiger Kombination verwendet werden.

Die Erfindung erlaubt es in sehr einfacher Weise, die Leistung eines ECM 10 besser als bisher auszunutzen, ohne dass hierzu eine spezielle (thermische) Nachbildung des Motors erforderlich wäre. Die Festlegung der Strom-Obergrenze $I_{soll}$ (in Fig. 8: $I_w$) im Drehzahlbereich des Motors ist in weiten Grenzen variabel. Naturgemäß sind auch sonst im Rahmen der vorliegenden Erfindung vielfache Abwandlungen und Modifikationen möglich.

**Patentansprüche**

1.  Elektronisch kommutierter Motor, welcher aufweist:

    Einen Stator (12, 14, 16) und einen mit diesem zusammenwirkenden Rotor (24);
    Rotorstellungssensoren (26, 28, 30) zur Lieferung von Ausgangssignalen, welche durch ihre Signalkombination die augenblickliche Stellung des Rotors (24) charakterisieren, wobei jedem Rotorstellungssensor (26, 28, 30) zur Verarbeitung seines Ausgangssignals ein mit einem Ausgang (132) versehener Komparator (126, 126', 126") zugeordnet ist, welcher Ausgang (132) bei Vorliegen eines bestimmten Wertes des zugeordneten Ausgangssignals ein vorgegebenes erstes Potenzial annimmt,
    und die Ausgänge der Komparatoren (126, 126', 126") jeweils über einen ersten Widerstand (134, 134', 134") mit einem vom ersten vorgegebenen Potenzial verschiedenen zweiten Potenzial und über einen zweiten Widerstand (138, 138', 138") mit einem Eingang (140) eines Vergleichskomparators (142) verbunden sind, welcher dazu ausgebildet ist, das Signal an diesem Eingang (140) mit einem Signal von im Wesentlichen vorgegebener Größe zu vergleichen und dadurch an seinem Ausgang (150) ein Signal (50) zu liefern, dessen Frequenz im Vergleich zur Frequenz des Signals am Ausgang eines Rotorstellungssensors (26, 28, 30) bei laufendem Motor erhöht ist.

2.  Motor nach Anspruch 1, welcher dazu ausgebildet ist, das Signal erhöhter Frequenz an seinem Ausgang (150) in Form von drehzahlproportionalen Stromimpulsen (50) zu liefern.

3.  Motor nach Anspruch 2, welcher mit einer Strombegrenzungsanordnung versehen ist, die auf eine PWM-Steuerung wirkt, welche im Betrieb PWM-Impulse (60) mit steuerbaren Tastverhältnis (pwm) und einer im Wesentlichen konstanten Frequenz abgibt, welche Strombegrenzungsanordnung beim Überschreiten eines vorgegebenen oberen Grenzwerts des Motorstroms eine Veränderung des Tastverhältnisses (pwm) der von dieser PWM-Steuerung abgegebenen Impulse (60) bewirkt, um den Motorstrom (list) zu reduzieren, wobei der obere Grenzwert durch ein Potenzial an einem Spannungsteiler (234, 238, 240) vorgegeben ist, welchem Spannungsteiler im Betrieb die drehzahlproporzionalen Stromimpulse (50) zuführbar sind, um den oberen Grenzwert (Isoll) des Motorstroms (list) mit zunehmender Drehzahl zu erhöhen.

4. Motor nach Anspruch 3, bei welchem parallel zu einem Teilwiderstand des Spannungsteilers (234, 238, 240) ein Kondensator (236) vorgesehen ist, welcher in entladenem Zustand eine Erhöhung und im geladenen Zustand eine Reduzierung des oberen Grenzwerts (Isoll) bewirkt,
und welcher vor dem Einschalten des Motors entladen ist, um beim Einschalten des Motors (10) den oberen Grenzwert zu erhöhen,
und welcher nach dem Einschalten des Motors (19) geladen wird, so dass der obere Grenzwert entsprechend sinkt.

5. Motor nach Anspruch 3 oder 4, bei welchem eine Überwachungsanordnung vorgesehen ist, welche überwacht, ob der Motorstrom (list) den vorgegebenen oberen Grenzwert (Isoll) der Strombegrenzungsanordnung überschreitet,
und welche Anordnung dann, wenn der Motorstrom (list) bei rotierendem Motor (10) den vorgegebenen oberen Grenzwert (Isoll) überschreitet, diesen Grenzwert während einer vorgegebenen Zeitspanne (T1) erhöht, um während dieser Zeitspanne vorübergehend eine höhere Motorleistung verfügbar zu machen.

6. Motor nach einem der vorhergehenden Ansprüche, welcher als kollektorloser elektronisch kommutierter Außenläufermotor ausgebildet ist.

Fig. 1

EP 1 501 184 A1

Fig. 2

Fig.3

Fig.4

EP 1 501 184 A1

Fig. 5

Fig. 6

Fig. 7

EP 1 501 184 A1

Fig. 8

A)

$u\ 184$

$195$

$u\ 194$

0

Dead zone

$t\ 10$

$t$

$T$

PWM

HIGH

$60$

LOW

B)

_Fig. 9_

EP 1 501 184 A1

Fig. 10

{{EP 1 501 184 A1}}

Fig. 11

Fig. 12

**EP 1 501 184 A1**

| Europäisches Patentamt | **EUROPÄISCHER RECHERCHENBERICHT** | Nummer der Anmeldung EP 04 02 5902 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br>Y<br>A | DE 199 49 804 A (PAPST MOTOREN GMBH & CO KG) 11. Mai 2000 (2000-05-11)<br>* Seite 9, Zeile 64 - Seite 10, Zeile 5 * | 1,2<br><br>3,4,6<br>5 | H02P6/00<br>H02P6/20<br>H02P5/17 |
| Y | DE 198 26 458 A (PAPST MOTOREN GMBH & CO KG) 16. Dezember 1999 (1999-12-16)<br>* Spalte 3, Zeile 65 - Spalte 5, Zeile 37 * | 3,4,6 | |
| A | DE 30 44 027 A (PAPST MOTOREN KG) 27. August 1981 (1981-08-27)<br>* Seite 18, Zeile 23 - Seite 24, Zeile 19 * | 1-6 | |
| A | US 5 268 623 A (MUELLER ROLF) 7. Dezember 1993 (1993-12-07)<br>* Spalte 6, Zeile 64 - Spalte 9, Zeile 28 * | 1-6 | |

RECHERCHIERTE SACHGEBIETE (Int.Cl.7)

H02P

Der vorliegende Recherchenbericht wurde für alle Patentansprüche erstellt

| Recherchenort | Abschlußdatum der Recherche | Prüfer |
|---|---|---|
| München | 23. November 2004 | Frapporti, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

24

**ANHANG ZUM EUROPÄISCHEN RECHERCHENBERICHT
ÜBER DIE EUROPÄISCHE PATENTANMELDUNG NR.**

EP 04 02 5902

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 19949804 | A | 11-05-2000 | DE | 19949804 A1 | 11-05-2000 |
| | | | AT | 275773 T | 15-09-2004 |
| | | | AU | 769821 B2 | 05-02-2004 |
| | | | AU | 6341999 A | 29-05-2000 |
| | | | CA | 2350325 A1 | 18-05-2000 |
| | | | DE | 59910471 D1 | 14-10-2004 |
| | | | WO | 0028646 A2 | 18-05-2000 |
| | | | EP | 1471628 A2 | 27-10-2004 |
| | | | EP | 1129519 A2 | 05-09-2001 |
| | | | JP | 2002530044 T | 10-09-2002 |
| | | | US | 6452349 B1 | 17-09-2002 |
| DE 19826458 | A | 16-12-1999 | DE | 19826458 A1 | 16-12-1999 |
| | | | AT | 276598 T | 15-10-2004 |
| | | | AU | 4510899 A | 05-01-2000 |
| | | | CA | 2334674 A1 | 23-12-1999 |
| | | | DE | 59910527 D1 | 21-10-2004 |
| | | | WO | 9966633 A1 | 23-12-1999 |
| | | | EP | 1467476 A2 | 13-10-2004 |
| | | | EP | 1088387 A1 | 04-04-2001 |
| | | | JP | 2002518979 T | 25-06-2002 |
| DE 3044027 | A | 27-08-1981 | CH | 656992 A5 | 31-07-1986 |
| | | | DE | 3044027 A1 | 27-08-1981 |
| US 5268623 | A | 07-12-1993 | DE | 3607014 A1 | 11-09-1986 |
| | | | JP | 63186590 A | 02-08-1988 |
| | | | JP | 3119299 B2 | 18-12-2000 |
| | | | JP | 10117494 A | 06-05-1998 |

EPO FORM P0461

Für nähere Einzelheiten zu diesem Anhang : siehe Amtsblatt des Europäischen Patentamts, Nr.12/82